# EUROPEAN PATENT SPECIFICATION

(11) **EP 3 821 078 B1**
(45) Date of publication and mention of the grant of the patent: **07.06.2023**
(21) Application number: 19739878.7
(22) Date of filing: 05.07.2019
(51) Int. Cl.: E01F 9/512, E01F 9/506, E01C 23/20

(54) **METHOD FOR MANUFACTURING A ROAD MARKING AND A ROAD MARKING**
VERFAHREN ZUR HERSTELLUNG EINER STRASSENMARKIERUNG SOWIE STRASSENMARKIERUNG
PROCÉDÉ POUR FABRIQUER UN MARQUAGE DE ROUTE ET MARQUAGE DE ROUTE

(30) Priority: 13.07.2018 DK PA201870487
(43) Date of publication of application: 19.05.2021
(73) Proprietor: PROMAX INDUSTRIES ApS, 8940 Randers SV (DK)
(72) Inventor: JENSEN, John Leth, 8920 Randers NV (DK); JANSSON, Erik, 716 94 Mullhüttan (SE)
(74) Representative: Patentgruppen A/S
(86) International application number: PCT/DK2019/050221
(87) International publication number: WO 2020/011325

(56) References cited:
- EP-A1- 0 602 599
- WO-A1-95/08426
- WO-A1-2010/059600
- US-A- 5 194 113
- US-A- 5 787 655

## Description

### Field of the invention

The invention relates to a method for manufacturing a road marking and a road marking.

### Background of the invention

Road markings (also called road symbols) are symbols, signs, figures, pictograms or any other kind of markings - such as speed limit signs or other traffic related signs, arrows, logos, directions, decorations, play symbols or other - attached to a road, a ground surface or another predominantly horizontal surface or even to a predominantly vertical surface such as a wall.

The road markings are typically bonded to e.g. a tarmac by heating the road marking such that it is melted (or at least sufficiently softened) and thereby bonds to the underlying surface - e.g. upon a subsequent cooling.

When forming particular road markings - such as a flag, a logo, a playground symbol or other markings comprising many different colours - the road marking is typically assembled from many smaller pieces, each piece having a particular colour and/or shape. However, such pieces can be difficult to put and hold correctly together on site and from the European Patent EP 2 032 764 B1 it is therefore known to manufacture a road marking by spraying adhesive on the back of the road marking pieces during the manufacturing process to hold the pieces together (by means of the adhesive), until the road marking is placed on the road and melted onto the surface. However, when the road marking is heated the adhesive will have to disappear (evaporate, combust or other) or it will have to somehow not reduce the road markings ability to bond with e.g. the tarmac - and this can be difficult. From US 5,787,655 A a method for manufacturing a decorative slip-resistant cover system is known and from WO 95/08426 a conformable pavement marking is known but these systems are complex and/or fragile.

It is therefore an object of the present invention to provide for a cost-efficient method for manufacturing a road marking.

### The invention

The invention provides for a method for manufacturing a road marking. The method comprises the steps of:
- placing a mesh and a plurality of road marking pieces, one on top of the other, to form at least part of a road marking,
- providing heat to the road marking in an area where the mesh is placed, characterized in each piece of said plurality of road marking pieces having a particular colour and/or shape, such as circular, triangular, a letter, an arrow, a flag, symbol or any combination of these shapes,
- forcing the mesh and the road marking pieces against each other to at least partially integrate the mesh in the road marking pieces.

Integrating the mesh at least partially in the road marking pieces is advantageous in that the road marking pieces hereby can be held securely together both before, during and after the road marking has been attached to the road or similar in a simple and inexpensive way.

Integrating the mesh into the road marking pieces is further advantageous in that the road marking is strengthened such that it is easier to transport and handle in that the pieces are reinforced by the mesh and the risk of the road marking breaking during transport or during handling is thereby reduced.

Furthermore, integrating the mesh at least partially in the road marking pieces is advantageous in that the road marking is considerably strengthened whereby the risk of flaking or peeling of the road marking during use is reduced. This is advantageous in that a smoother surface of the road marking is provided and thereby driving over the road marking is more comfortable in that less noise and vibrations are generated.

Also, integrating the mesh in the road marking is advantageous in that the road marking is reinforced such that flaking or peeling is prevented even on a more porous surface where parts of the road marking may not be able to bind to the surface.

In this context the term "mesh" should be understood as any kind of grid, grate, lattice, grill, net or another kind of interconnected material suitable for the purpose of strengthening road markings.

It should be emphasised that the term "road marking" should be understood as a symbol, a sign, an emblem or any other marking suitable for the purpose of decorating or marking of roads, playgrounds, schoolyards, shopping centres, office complexes, highways, pedestrian crosswalks, parking lots or other similar areas.

In an aspect of the invention, the melting point of the mesh is higher than the melting point of the road marking pieces.

Forming the mesh such that the melting point of the mesh is higher than the melting point of the road marking pieces is advantageous in that the road marking melts or substantially softens prior to the mesh. Furthermore, this is advantageous in that the mesh may at all times, during normal execution of the method, keep its structural integrity by not melting or softening before the road marking is softened.

In an aspect of the invention, the heat is provided to the road marking pieces substantially simultaneously as the mesh and the road marking pieces are forced against each other.

Providing the heat almost at the same time as the mesh and road marking pieces are forced together is advantageous in that the method is energy and time efficient.

In an aspect of the invention, the heat is provided by means of a hot plate and wherein the hot plate also forces the mesh and the road marking pieces against each other.

Heating the mesh and road marking pieces simultaneous with the mesh and road marking pieces being forced against each other by means of a hot plate is advantageous in that it is simple and cheap. Furthermore, it is advantageous in that a hot plate provides for even pressure distribution and heat transfer across the surface of the road marking pieces and the mesh.

In an aspect of the invention, the mesh comprises metal.

Forming the mesh such that it comprises metal provides for a cheap and strong mesh. Furthermore, the good heat conductivity of the mesh is advantageous in that the heat is conducted easily into the area of the road marking pieces around the mesh.

In an aspect of the invention, the mesh comprises plastic material.

Forming the mesh such that it comprises plastic material is advantageous in that it provides for a cheap mesh.

In an aspect of the invention, the melting point of the mesh is above 180 degrees Celsius, preferably above 200 degrees Celsius and most preferred above 220 degrees Celsius.

Forming the mesh such that the melting point is above the above-mentioned temperatures is advantageous in that the mesh does not melt during the heating of the road marking pieces. Furthermore, it is advantageous in that the structure of the mesh is not damaged such that the rigidity of the mesh is maintained.

Forming the mesh such that the melting point is above the above-mentioned levels is advantageous in that the mesh will remain substantially solid during integration in the road marking pieces.

In an aspect of the invention, the at least one road marking is predominantly made of a thermoplastic material.

Forming the road marking in a thermoplastic material is advantageous in that it enables that the road marking to adhere directly to road surface after being heated - i.e. without the use of any additional adhesives, additives, interlocking parts or other. Furthermore, thermoplastic material enables a fast and cheap manufacturing process in that the road marking may be manufactured by using existing thermoplastic moulding and extrusion techniques.

Furthermore, thermoplastic material provides for good anti-skid properties, easy to manufacture in customised colours, reflective properties, fast-drying and wear resistance.

In an aspect of the invention, the melting point of the road marking pieces is between 110-270 degrees Celsius, preferably between 130-250 degrees Celsius and most preferred between 150-230 degrees Celsius.

Forming the road marking such that the melting point is in above-mentioned ranges is advantageous in that the road marking can be softened or melted when integrating the mesh into the road marking but will remain substantially solid when exposed to external conditions such as radiation from the sun, heat from the road surface or heat generated from passing road vehicles.

In an aspect of the invention, the road marking piece and the mesh are forced against each other by means of a pressing roller.

It is advantageous to force the road marking pieces and the mesh against each other by means of a pressing roller in that it is possible to establish a production line with a continuous working flow. Furthermore, pressing rollers are advantageous in that they may also be used for controlling the depth of penetration of the mesh into the road marking pieces by adjusting the clearance available through the pressing roller.

In an aspect of the invention, the pressing roller is a silicone roller.

The road marking piece material may be relatively sticky when it is softened and therefore the road marking material may tend to adhere and stick to surfaces such as the pressing rollers. And if a part of the road marking piece adheres to the pressing roller it may reduce the efficiency of the manufacturing process and also the quality of the final road marking. Therefore, it is advantageous to use a silicone roller for pressing the road marking pieces and mesh against each other in that the road marking pieces are less likely to stick and adhere to the silicone roller whereby the road marking does not fold, break or in other ways is destroyed such that it is rendered unusable. This is further advantageous in that the manufacturing process is more smooth as the production line does not have to be interrupted for cleaning the silicone pressing rollers.

In an aspect of the invention, the heat is provided to said road marking pieces by means of infrared radiation.

It is advantageous to provide heat to the road marking pieces by means of infrared radiation in that the heat may be provided to the material from a distance (thermal radiation). Furthermore, using infrared lightning for heating the road marking material is advantageous in that the wavelength of the infrared light may be adjusted to match the absorption characteristics of the material whereby the efficiency of the infrared heating source is increased.

In an aspect of the invention, the method further comprises the step of using cooling means for cooling the road marking after the step of forcing the road marking pieces and the mesh against each other.

It is advantageous to cool the road marking in that the manufacturing process may be sped up because the cooling of the road marking is performed actively instead of letting the road marking cool off by itself.

It should be noted that the term "cooling means" should be understood as a blower, cold plate, fluid bath or other kind of coolers for cooling the road marking.

In an aspect of the invention, the step of cooling said road marking comprises placing the road marking on a cold plate.

It is advantageous to use a cold plate for cooling the road marking in that it provides for a localized cooling area which is ideal for cooling a large, flat surface by contact cooling (heat conduction). Cold plates may comprise a coolant (water, oil, refrigerant or other) which flows inside the cold plate. Therefore, the rate of cooling may be controlled by adjusting the rate of flow, temperature of the coolant or in other ways control the amount of heat being deprived from the road marking.

In an aspect of the invention, at least a part of the mesh is integrated between 0,05mm and 5mm, preferably 0,1mm and 3mm and most preferably between 0, 15mm and 1mm into the road marking piece.

If a part of the mesh is integrated too little into the road marking pieces, the road marking pieces may not be held together sufficiently strong. And it may require a lot of heat to soften a large portion in the thickness direction in order to integrate the mesh far into the road marking piece. Therefore, the above-mentioned ranges reflect an advantageous relationship between functionality and efficiency.

The invention also provides for a road marking comprising an at least partially integrated mesh being integrated by means of a method according to any of the previously discussed methods.

### Figures

The invention will be described in the following with reference to the figures in which
- fig. 1: illustrates the step of placing the mesh and the road marking pieces one on top of the other as seen from the side,
- fig. 2: illustrates the road marking pieces and the mesh one on top of the other as seen from the side,
- fig. 3: illustrates the step of providing heat to the mesh and the road marking pieces as seen from the side,
- fig. 4: illustrates the step of forcing the mesh and the road marking pieces against each other as seen from the side,
- fig. 5: illustrates the step of providing heat and forcing the mesh and the road marking pieces against each other by means of heat transfer rollers,
- fig. 6: illustrates a top view of the mesh positioned on top of the road marking pieces on a conveyor belt,
- fig. 7: illustrates a top view of the road marking pieces positioned on top of the mesh on a conveyor belt,
- fig. 8: illustrates the step of placing the mesh and the road marking pieces on a hot plate as seen from the side,
- fig. 9: illustrates the step of providing heat to the mesh and the road marking pieces from below as seen from the side,
- fig. 10: illustrates the mesh integrated in the road marking pieces as seen from the side, and
- fig. 11: illustrates the mesh being integrated into the road marking pieces by means of infrared radiation as seen from the side.

### Detailed description

It should be noted that orientation terms such as "top part", "bottom part", "above" and "below" should be understood in relation to the road marking 2 in normal operation, i.e. when the road marking is positioned on the ground with the "bottom part" being the side which is facing the ground and the "top part" being the side which faces away from the ground and which is visible.

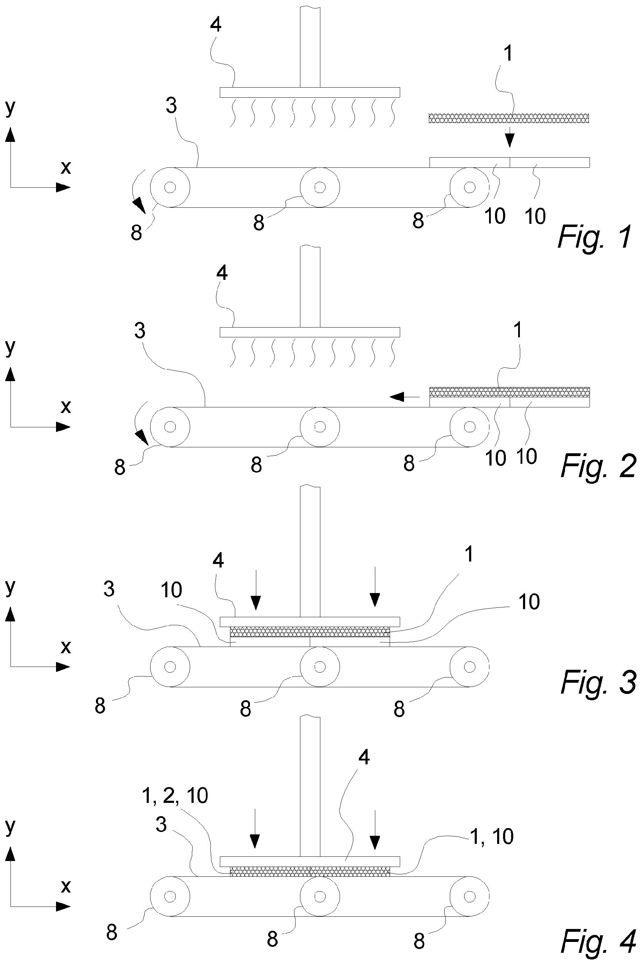

Fig. 1 and fig. 2 illustrate the step of placing the mesh 1 and the road marking pieces 10 one on top of the other as seen from the side. Fig. 3 illustrates the step of providing heat to the mesh 1 and the road marking pieces 10 and forcing the mesh 1 and the road marking pieces 10 against each other as seen from the side. Fig. 4 illustrates the road marking 2 with the integrated mesh 1 as seen from the side.

Figures 1-4 illustrate one way of how the method of integrating the mesh 1 in the road marking pieces 10 could be performed.

In this embodiment, the road marking pieces 10 are rectangular. However, in other embodiments, the road marking pieces 10 could be circular, triangular, a letter, an arrow, a flag, symbol or any combination of these shapes which can be assembled to form a suitable road marking for decorating or marking of roads, playgrounds, schoolyards, parking lots or other similar areas. The road marking pieces 10 are usually subjected to heavy abrasive loads such as weather, passing traffic, cleaning chemicals, salt for keeping the roads ice-free in cold environments, temperature differences or other loads which may compromise the function of the road marking 2. The road markings can usually not be e.g. surface coated to withstand these loads as this coating is likely to quickly be worn away. Thus, to form the above-mentioned symbols or signs, the road marking 2 usually consist of a plurality of road marking pieces 10 each of which are coloured homogeneously through the thickness, such that the colour is maintained even when the road marking pieces 10 start to wear down. Another important aspect of road markings is that they usually must comprise the substantially same coefficient of thermal expansion as the underlying surface, often tarmac, such that the thermal expansion of the road marking is substantially in accordance with the thermal expansion of the underlying surface to minimise tension loads.

In this embodiment, the mesh 1 is positioned on top of a layer of road marking pieces 10 which are positioned side by side on a conveyor belt 3 in a manufacturing line. The mesh 1 and road marking pieces 10 are conveyed towards the hot plate 4 which is arranged such that it provides heat to the mesh 1 and the road marking pieces 10 while simultaneously forcing the mesh 1 into the road marking pieces 10 whereby the mesh 1 is integrated in the road marking pieces 10. However, in another embodiment, layer of road marking pieces 10 could be positioned on top of the mesh 1.

In an embodiment, the hot plate 4 may comprise a silicone layer on the pressing surface such that the road marking pieces 10 are less likely to stick and adhere to the hot plate 4.

In this embodiment, the hot plate 4 is positioned above the mesh 1 and the road marking pieces 10. However, in another embodiment, the hot plate 4 could be positioned such that heat is provided from below and whereby the mesh 1 and the road marking pieces 10 are forced against each other by means of e.g. a press (not shown) but could also be forced against each other by force of gravity or other means for forcing the mesh and the road marking pieces 10 against each other.

The hot plate 4 could be coated with a non-stick coating to reduce the risk of the road marking pieces 10 or the mesh 1 sticking to the hot plate 4.

In this embodiment, the mesh 1 is positioned on top of the road marking pieces 10. Hereby the mesh 1 can be integrated in the road marking pieces 10 by providing heat from above, e.g. by the hot plate 4. However, in another embodiment the road marking pieces 10 could be positioned on top of the mesh 1. Hereby the mesh 1 could be laid out first where after the road marking pieces 10 could be positioned on top of the mesh 1 to form the road marking 2. This is further advantageous in the context when the heat plate 4 is be positioned below the mesh 1 and the road marking pieces 10 such that only the lower part of the road marking pieces 10 is softened for integrating the mesh 1 in the road marking 2. This provides for an energy efficient method of integrating the mesh 1 in the road marking pieces 10.

In this embodiment, the heat is provided by means of a hot plate 4. However, in another embodiment, the heat could be provided by means of a heat blower, a gas burner, heat transfer rollers, radiation with microwaves, infrared radiation or other means for substantially elevating the temperature of the road marking pieces 10 and the mesh 1.

The heat could also be provided by conducting electricity through the mesh strings or wires (if the mesh 1 is manufactured in a material suitable for this) whereby the mesh 1 and the area of the road marking pieces 10 at the vicinity of the mesh 1 is heated.

This is advantageous in that the heat is concentrated at the mesh strings whereby an energy efficient method for integrating the mesh 1 in the road marking pieces 10 is achieved. In that case the mesh 1 could made of, or at least comprise, an electrically conductive material such as a metal or other material capable of allowing flow of electrical current.

In this embodiment, the mesh 1 is integrated in the at least one road marking pieces 10 by forcing the mesh 1 into the at least one road marking pieces 10. However, in another embodiment, the mesh 1 could sink into the at least one road marking pieces 10 by means of gravity force.

In this embodiment, the mesh 1 and road marking pieces 10 are forced against each other simultaneously as the heating is provided to the road marking pieces 10 and the mesh 1. However, in another embodiment, the heating and the forcing of the mesh 1 and road marking pieces 10 against each other is not simultaneous.

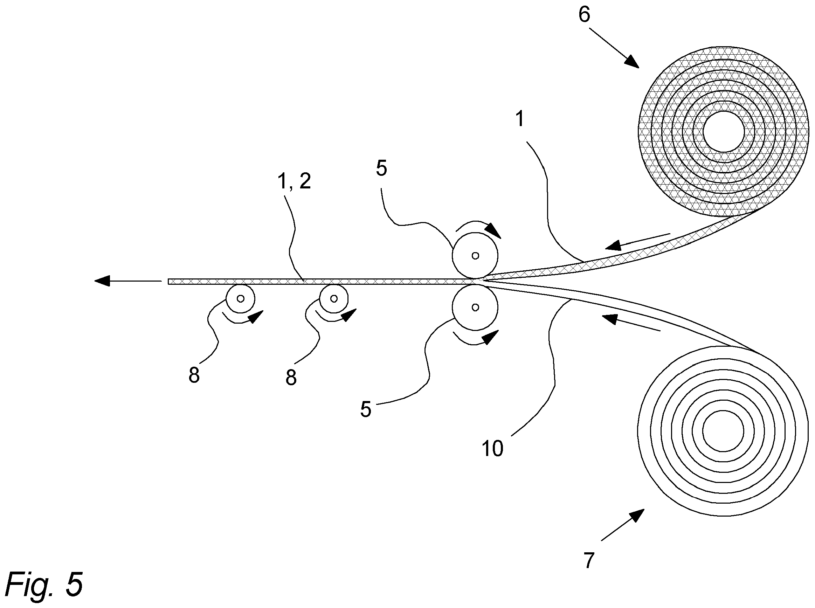

Fig. 5 illustrates the step of providing heat and forcing the mesh 1 and road marking pieces 10 against each other by means of heat transfer rollers 5.

The mesh 1 and road marking pieces 10 are unrolled from rolls 6 and 7 of mesh 1 and road marking piece 10, respectively. The road marking piece 10 and mesh 1 are forced against each other while simultaneously being heated by the heat transfer rollers 5. The heat transfer rollers may comprise a silicone layer such that the road marking pieces 10 are less likely to adhere and stick to the heat transfer rollers 5. After passing the heat transfer rollers 5 the road marking piece 10 with the integrated mesh 1 is supported by the conveyor wheels 8.

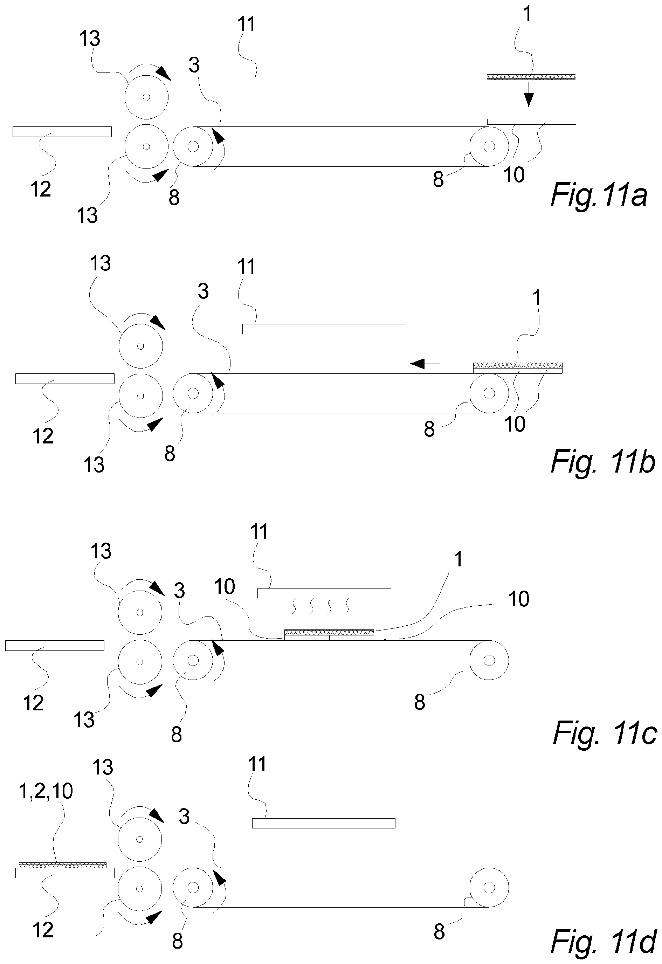

In this embodiment, the mesh 1 is integrated in the road marking piece 10 by means of a heat transfer roller 5, which provides heat to the road marking piece 10 and the mesh 1 and simultaneously forces the mesh 1 and the road marking piece 10 against each other. However, in another embodiment, the mesh 1 and road marking piece 10 could be heated shortly before passing pressing rollers (see fig. 11). However, in another embodiment, the mesh 1 and the road marking pieces 10 could be forced against each other by means of just one heat transfer roller 5 and a support surface, i.e. the heat transfer roller 5 could force the mesh 1 and road marking pieces 10 against each other by pushing against an underlying surface.

In this embodiment, the road marking piece 10 is supplied from one roll 7. However, in another embodiment, several rolls 7 may be positioned adjacent to each other wherein each roll could provide for road marking pieces 10 of e.g. a specific colour. A cutting tool (not shown) could be used for cutting out a section of road marking piece 10 from the roller 7.

When the road marking 2 is to be used on e.g. a road surface, the road marking 2 with the integrated mesh 1 could be bonded to the surface by sufficiently heating the road marking 2 with the integrated mesh 1 such that the road marking 2 melts, or at least substantially softens enough, such that it bonds directly to the surface upon subsequent cooling. Therefore, a thermoplastic material is a suitable material in that it provides for a good bonding to the surface upon cooling of the road marking 2. The road marking 2 could also be provided with an adhesive coating on the side which faces towards the surface such that it aids the adherence to the surface.

The thickness of the road marking pieces 10 is usually much larger than the thickness of the mesh 1. In this embodiment, the thickness of the road marking pieces 10 is 5mm. However, in another embodiment, the thickness of the road marking pieces 10 could be 4mm, 3mm, 2mm or even smaller or it could be 6mm, 8m, 10mm or even larger.

In this embodiment, the mesh is integrated in substantially the bottom part of the road marking pieces 10. However, in another embodiment, the mesh 1 could also be integrated in substantially the middle part or substantially the top part of the road marking pieces 10.

Integrating the mesh 1 in the road marking pieces 10 whereby the road marking 2 is strengthened is advantageous in that the road marking 2 may be rolled up in a large roll. This is advantageous in that the road marking 2 can be transported more compact. This is further advantageous in that the roll of coiled up road marking can easily be unrolled at desired location whereby placement of a large road marking 2 is eased.

Integrating the mesh 1 in the road marking pieces 10 whereby the road marking 2 is strengthened is also advantageous in that removing the road marking 2 from the road surface is eased in that the road surface 9 does not crumble into small pieces upon removal. Removal of the road marking 2 could be of relevance if e.g. a symbol is to be renewed, changed or a speed limit updated.

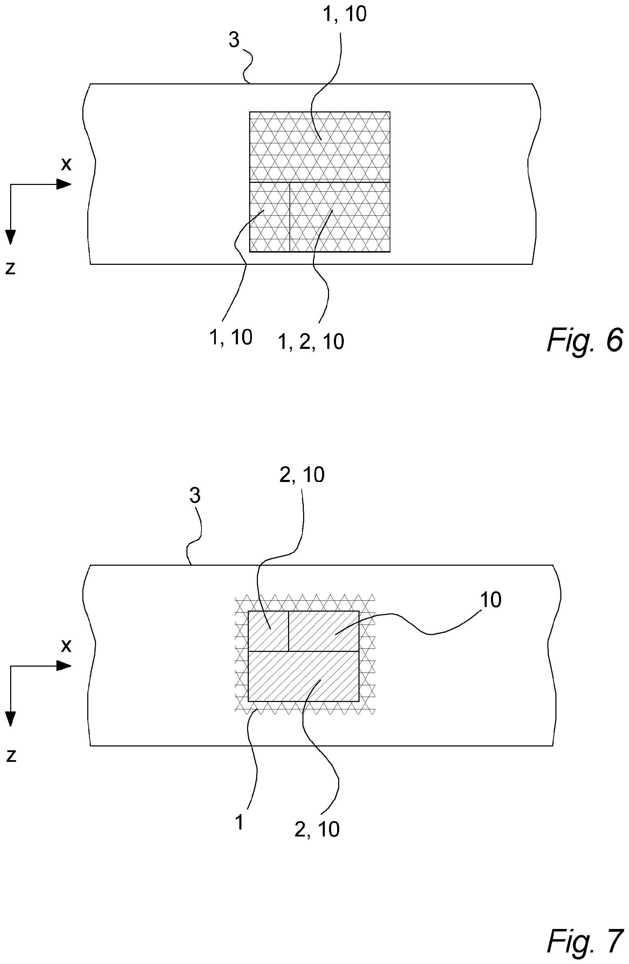

Fig. 6 illustrates a top view of the mesh positioned on top road marking pieces 10 on a conveyor belt 3.

In this embodiment, the mesh 1 could is formed of fibres of polymer material. However, in another embodiment, the mesh 1 could be formed by extruding, moulding, gluing, welding, weaving or soldering strings or fibres of metal, polymers, thermoplastics or any other material suitable for the purpose of joining road marking pieces 10.

The strings in the mesh 1 could be arranged randomly e.g. non-woven or the mesh 1 could be formed with some sort of pattern such as squares, triangles, diamonds, hexagons or other patterns for providing the mesh 1 with adequate rigidity. Likewise, the cross section of the strings or fibres of the mesh 1 could be of circular, triangular, rectangular or any suitable cross-sectional shape.

In this embodiment, the road marking pieces 10 have a constant thickness, i.e. the thickness is the same no matter at what position (along the width or length) a cross sectional view is performed. However, in another embodiment, the thickness of the road marking pieces 10 could vary, e.g. to obtain a rumble effect when passing over the road marking 2, to account for increased degree of wear at different positions on the road marking 2 or to highlight specific parts of the road marking 2.

In this embodiment, the mesh is made of steel. However, in another embodiment, the mesh could be made of another metal, such as iron, aluminium, copper or other metal.

In this embodiment, the mesh 1 and road marking 2 are positioned on a conveyor belt. However, in another embodiment, the mesh 1 and the road marking 2 could be positioned directly on the road surface or other stationary working surface.

Fig. 7 illustrates a top view of road marking pieces 10 positioned on top of the mesh 1 on a conveyor belt 3.

Positioning the road marking pieces 10 on top of the mesh 1 is advantageous in that assembly of a plurality of road marking pieces 10 is easier in that the road marking pieces 10 can simply be placed on the mesh 1 to form the desired symbol. After heating the mesh 1 and road marking pieces 10 such that the mesh 1 is integrated in the road marking pieces 10, the remaining parts of the mesh 1, which protrude outside of the road marking 2, could be cut away.

In this embodiment the road marking pieces 10 are of rectangular shape. However, in other embodiments, the shape of the road marking pieces could be circular, triangular, a letter or other shape or symbol suitable for the purpose of decorating or marking of roads, playgrounds, schoolyards or other areas.

Integrating the mesh 1 into the road marking pieces 10 is advantageous in that large road markings may be formed without upscaling the size of manufacturing devices in that the joined road marking pieces 10 form a larger road marking 2.

Heating the road marking pieces 10 in an area where the mesh 1 is placed is advantageous in that a mesh 1 may be integrated in just a part of the road marking pieces 10 e.g. in connection with maintenance or strengthening of a particular part of the road marking 2 which is prone to flaking or peeling. This is further advantageous in that energy is not wasted in heating the entire road marking 2.

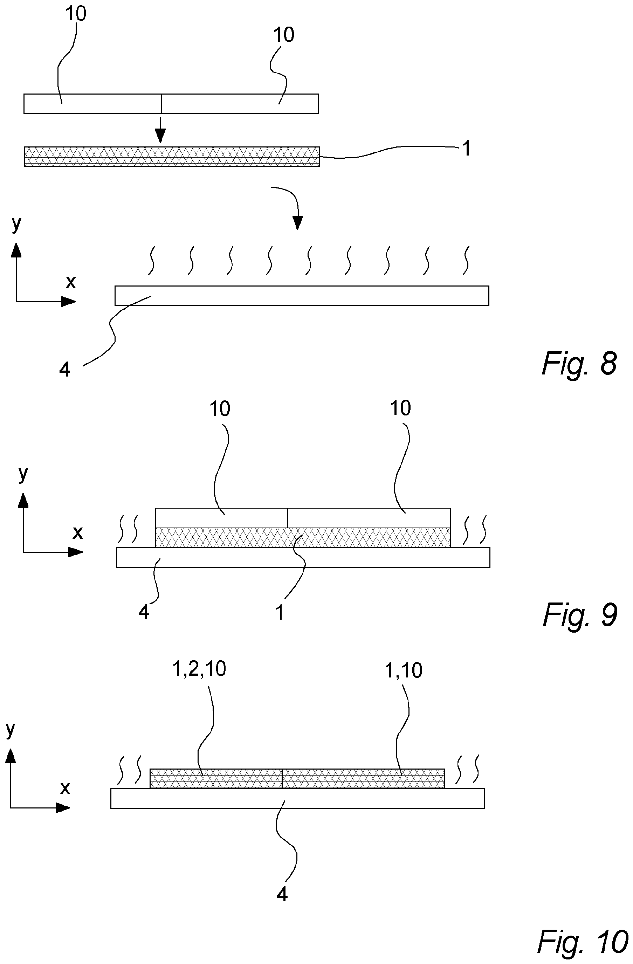

Figure 8 to figure 10 illustrate how the mesh could be integrated in the road marking pieces 10 by heating the mesh and the road marking pieces 10 from below.

Fig. 11 illustrates the mesh 1 being integrated into the road marking pieces 10 by means of pressing rollers as seen from the side.

In this embodiment, the heat is provided to the road marking pieces 10 by means of an infrared radiation source 11. The infrared radiation provides heat to the road marking material by thermal radiation such that a pressure gradient is created through the thickness of the road marking piece 10. Since the heat is provided from above, the temperature at one side of the road marking piece 10 is larger than the temperature at the other side of the road marking piece 10. The temperature at the side in which the mesh 1 is to be integrated should be sufficiently high to ensure that the road marking piece 10 is sufficiently softened such that the mesh 1 may be integrated into the road marking piece. The temperature is typically around 160-180 degrees Celsius at the top side while it is around 60-70 degrees Celsius at the bottom side.

In this embodiment, the infrared radiation source 11 is an infrared heater. However, in another embodiment, the radiation source 11 could be an infrared lamp, ceramic infrared heater, metal wire element or other types of infrared radiation sources for emitting infrared radiation at different peak wavelengths for providing certain temperature to the road marking piece 10.

As mentioned, the temperature is related to the peak wavelength of the infrared radiation. Thus, the rate of heat provided to the road marking pieces 10 may be controlled by this relationship. However, in an embodiment, the infrared radiation source 11 could be adjusted and maintained in a specific setting such that the infrared radiation source 11 emits a constant amount of heat to the road marking material. In that case, the temperature of the road marking piece 10 could be controlled by the conveying speed of the underlying conveyor belt 3. Thus, a fast conveying speed would reduce the time period under which the road marking piece 10 is exposed to heat resulting in a low road marking temperature and a slow conveying speed would increase the heat exposure time and therefore a large road marking temperature. A sensor (not shown) may monitor the surface temperature of the road marking piece 10 such that the speed of the conveyor belt 3 may be adjusted accordingly.

Once the road marking pieces 10 have been heated to sufficient temperature by the infrared radiation source 11, the road marking pieces 10 and the mesh 1 are conveyed to pressing rollers 13 which force the mesh 1 into the road marking pieces 10 such that the mesh 1 is at least partially integrated into the road marking pieces 10. Afterwards the road marking 2 is cooled by cooling means 12 such that the road marking 2 cures and hardens.

In this embodiment, the cooling means 12 is cold plate. However, in another embodiment, the cooling means 12 could be a blower, a fluid bath, fluid spray or other kind of ways for rapidly cooling the road marking pieces 10 with the integrated mesh 1 to form the road marking 2.

The cold plate could be made from aluminium, copper, brass, steel or other heat conducting metals. Also, to increase the heat transfer rate, the cold plate could have an increased surface area in the form of grooves, fins, corrugations or other surface area increasing methods. The cold plate may also comprise tubes for conducting a coolant for further increasing the rate of heat transfer.

In this embodiment, the pressing roller 13 comprises silicone on the pressing surface such that the road marking pieces 10 do not adhere to the pressing roller 13. To even further reduce tendency of the road marking piece 10 to stick to the pressing roller 13, the pressing roller 13 may be heated. Also, a hot pressing roller 13 may aid in keeping the road marking piece 10 hot such that it is easier to force the road marking piece 10 and mesh 1 against each other.

The invention has been exemplified above with reference to specific examples of mesh 1, road marking 2, infrared radiation source 11 and other. However, it should be understood that the invention is not limited to the particular examples described above but may be designed and altered in a multitude of varieties within the scope of the invention as specified in the claims.

### List

1. Mesh
2. Road marking
3. Conveyor belt
4. Hot plate
5. Heat transfer roller
6. Mesh roll
7. Road marking roll
8. Conveyor wheels
9. Road surface
10. Road marking pieces
11. Infrared radiation source
12. Cooling means
13. Pressing roller

## Claims

1. A method for manufacturing a road marking (2), said method comprising the steps of:
• placing a mesh (1) and a plurality of road marking pieces (10), one on top of the other, and
• providing heat to said road marking pieces (10) in an area where said mesh (1) is placed,
**characterised in** each piece of said plurality of road marking pieces having a specific colour and/or shape, such as rectangular, circular, triangular, a letter, an arrow, a flag, symbol or any combination of these shapes,
said method further including at least partially integrating said mesh (1) in said road marking pieces (10) by forcing said mesh (1) and said road marking pieces (10) against each other.

2. A method for manufacturing a road marking (2) according to claim 1, wherein the melting point of said mesh (1) is higher than the melting point of said road marking pieces (10).

3. A method for manufacturing a road marking (2) according to claim 1 or 2, wherein said heat is provided to said road marking (2) substantially simultaneously as said mesh (1) and said road marking pieces (10) are forced against each other.

4. A method for manufacturing a road marking (2) according to any of the preceding claims, wherein heat is provided by means of a hot plate (4) and wherein said hot plate (4) also forces said mesh (1) and said road marking pieces (10) against each other.

5. A method for manufacturing a road marking (2) according to any of the preceding claims, wherein said mesh (1) comprises metal.

6. A method for manufacturing a road marking (2) according to any of the preceding claims, wherein said mesh (1) comprises plastic material.

7. A method for manufacturing a road marking (2) according to any of the preceding claims, wherein the melting point of said mesh (1) is above 180 degrees Celsius, preferably above 200 degrees Celsius and most preferred above 220 degrees Celsius.

8. A method for manufacturing a road marking (2) according to any of the preceding claims, wherein said road marking pieces (10) are predominantly made of a thermoplastic material.

9. A method for manufacturing a road marking (2) according to any of the preceding claims, wherein the melting point of said road marking pieces is in the range 110-270 degrees Celsius, preferably in the range 130-250 degrees Celsius and most preferred in the range 150-230 degrees Celsius.

10. A method for manufacturing a road marking (2) according to any of the preceding claims, wherein said road marking pieces (10) and said mesh (1) are forced against each other by means of a pressing roller.

11. A method for manufacturing a road marking (2) according claim 10, wherein said pressing roller is a silicone roller.

12. A method for manufacturing a road marking (2) according to any of the preceding claims, wherein said heat is provided to said road marking pieces (10) by means of infrared radiation.

13. A method for manufacturing a road marking (2) according to any of the preceding claims, wherein said method further comprises the step of using cooling means (12) for cooling said road marking (2) after the step of forcing said road marking pieces (10) and mesh (1) against each other.

14. A method for manufacturing a road marking (2) according to claim 12, wherein said step of cooling said road marking (2) comprises placing said road marking (2) on a cold plate (12).

15. A method for manufacturing a road marking (2) according to any of the preceding claims, wherein at least a part of said mesh (1) is integrated between 0,05mm and 5mm, preferably 0,1mm and 3mm and most preferably between 0,15mm and 1mm into said road marking piece (10).

## Patentansprüche

1. Verfahren zur Herstellung einer Straßenmarkierung (2), wobei das Verfahren die folgenden Schritte umfasst:
• Platzieren eines Gitters (1) und einer Vielzahl von Straßenmarkierungsstücken (10) übereinander, und
• Bereitstellen von Wärme an den Straßenmarkierungsstücken (10) in einem Bereich, in dem das Gitter (1) platziert ist,
**dadurch gekennzeichnet, dass** jedes Stück der Vielzahl von Straßenmarkierungsstücken eine spezifische Farbe und/oder Form aufweist, wie etwa rechteckig, kreisförmig, dreieckig, ein Buchstabe, ein Pfeil, eine Flagge, ein Symbol oder eine beliebige Kombination dieser Formen,
wobei das Verfahren ferner mindestens partielles Integrieren des Gitters (1) in die Straßenmarkierungsstücke (10) durch Drücken des Gitters (1) und der Straßenmarkierungsstücke (10) gegeneinander beinhaltet.

2. Verfahren zur Herstellung einer Straßenmarkierung (2) nach Anspruch 1, wobei der Schmelzpunkt des Gitters (1) höher ist als der Schmelzpunkt der Straßenmarkierungsstücke (10).

3. Verfahren zur Herstellung einer Straßenmarkierung (2) nach Anspruch 1 oder 2, wobei die Wärme, die an der Straßenmarkierung (2) bereitgestellt ist, im Wesentlichen gleichzeitig bereitgestellt wird, wenn das Gitter (1) und die Straßenmarkierungsstücke (10) gegeneinander gedrückt werden.

4. Verfahren zur Herstellung einer Straßenmarkierung (2) nach einem der vorhergehenden Ansprüche, wobei die Wärme mittels einer Heizplatte (4) bereitgestellt wird und wobei die Heizplatte (4) auch das Gitter (1) und die Straßenmarkierungsstücke (10) gegeneinander drückt.

5. Verfahren zur Herstellung einer Straßenmarkierung (2) nach einem der vorhergehenden Ansprüche, wobei das Gitter (1) Metall umfasst.

6. Verfahren zur Herstellung einer Straßenmarkierung (2) nach einem der vorhergehenden Ansprüche, wobei das Gitter (1) Kunststoffmaterial umfasst.

7. Verfahren zur Herstellung einer Straßenmarkierung (2) nach einem der vorhergehenden Ansprüche, wobei der Schmelzpunkt des Gitters (1) über 180 Grad Celsius liegt, vorzugsweise über 200 Grad Celsius und am meisten bevorzugt über 220 Grad Celsius.

8. Verfahren zur Herstellung einer Straßenmarkierung (2) nach einem der vorhergehenden Ansprüche, wobei die Straßenmarkierungsstücke (10) überwiegend aus einem thermoplastischen Material gefertigt sind.

9. Verfahren zur Herstellung einer Straßenmarkierung (2) nach einem der vorhergehenden Ansprüche, wobei der Schmelzpunkt der Straßenmarkierungsstücke im Bereich von 110-270 Grad Celsius liegt, vorzugsweise im Bereich von 130-250 Grad Celsius und am meisten bevorzugt im Bereich von 150-230 Grad Celsius.

10. Verfahren zur Herstellung einer Straßenmarkierung (2) nach einem der vorhergehenden Ansprüche, wobei die Straßenmarkierungsstücke (10) und das Gitter (1) mittels einer Druckwalze gegeneinander gedrückt werden.

11. Verfahren zur Herstellung einer Straßenmarkierung (2) nach Anspruch 10, wobei die Druckwalze eine Silikonwalze ist.

12. Verfahren zur Herstellung einer Straßenmarkierung (2) nach einem der vorhergehenden Ansprüche, wobei die Wärme den Straßenmarkierungsstücken (10) mittels Infrarotstrahlung bereitgestellt wird.

13. Verfahren zur Herstellung einer Straßenmarkierung (2) nach einem der vorhergehenden Ansprüche, wobei das Verfahren ferner den Schritt des Verwendens von Kühlmitteln (12) zum Kühlen der Straßenmarkierung (2) nach dem Schritt des Drückens der Straßenmarkierungsstücke (10) und des Gitters (1) gegeneinander umfasst.

14. Verfahren zur Herstellung einer Straßenmarkierung (2) nach Anspruch 12, wobei der Schritt des Kühlens der Straßenmarkierung (2) Platzieren der Straßenmarkierung (2) auf einer Kühlplatte (12) umfasst.

15. Verfahren zur Herstellung einer Straßenmarkierung (2) nach einem der vorhergehenden Ansprüche, wobei mindestens ein Teil des Gitters (1) zwischen 0,05 mm und 5 mm, vorzugsweise 0,1 mm und 3 mm und am meisten bevorzugt zwischen 0,15 mm und 1 mm in das Straßenmarkierungsstück (10) integriert ist.

## Revendications

1. Procédé de fabrication d'un marquage routier (2), ledit procédé comprenant les étapes de :
• placement d'un treillis (1) et d'une pluralité de pièces de marquage routier (10), les uns au-dessus des autres, et
• fourniture de chaleur auxdites pièces de marquage routier (10) dans une zone où ledit treillis (1) est placé,
**caractérisé en ce que** chaque pièce de ladite pluralité de pièces de marquage routier a une couleur et/ou forme spécifique, telle que rectangulaire, circulaire, triangulaire, une lettre, une flèche, un drapeau, un symbole ou toute combinaison de ces formes,
ledit procédé incluant en outre l'intégration au moins partielle dudit treillis (1) dans lesdites pièces de marquage routier (10) en forçant ledit treillis (1) et lesdites pièces de marquage routier (10) les uns contre les autres.

2. Procédé de fabrication d'un marquage routier (2) selon la revendication 1, dans lequel le point de fusion dudit treillis (1) est supérieur au point de fusion desdites pièces de marquage routier (10).

3. Procédé de fabrication d'un marquage routier (2) selon la revendication 1 ou 2, dans lequel ladite chaleur est fournie audit marquage routier (2) sensiblement simultanément tandis que ledit treillis (1) et lesdites pièces de marquage routier (10) sont forcés les uns contre les autres.

4. Procédé de fabrication d'un marquage routier (2) selon l'une quelconque des revendications précédentes, dans lequel la chaleur est fournie au moyen d'une plaque chauffante (4) et dans lequel ladite plaque chauffante (4) force également ledit treillis (1) et lesdites pièces de marquage routier (10) les uns contre les autres.

5. Procédé de fabrication d'un marquage routier (2) selon l'une quelconque des revendications précédentes, dans lequel ledit treillis (1) comprend du métal.

6. Procédé de fabrication d'un marquage routier (2) selon l'une quelconque des revendications précédentes, dans lequel ledit treillis (1) comprend une matière plastique.

7. Procédé de fabrication d'un marquage routier (2) selon l'une quelconque des revendications précédentes, dans lequel le point de fusion dudit treillis (1) est supérieur à 180 degrés Celsius, de préférence supérieur à 200 degrés Celsius et le plus préférablement supérieur à 220 degrés Celsius.

8. Procédé de fabrication d'un marquage routier (2) selon l'une quelconque des revendications précédentes, dans lequel lesdites pièces de marquage routier (10) sont principalement constituées d'un matériau thermoplastique.

9. Procédé de fabrication d'un marquage routier (2) selon l'une quelconque des revendications précédentes, dans lequel le point de fusion desdites pièces de marquage routier est dans la plage de 110-270 degrés Celsius, de préférence dans la plage de 130-250 degrés Celsius et le plus préférablement dans la plage 150-230 degrés Celsius.

10. Procédé de fabrication d'un marquage routier (2) selon l'une quelconque des revendications précédentes, dans lequel lesdites pièces de marquage routier (10) et ledit treillis (1) sont forcés les uns contre les autres au moyen d'un rouleau presseur.

11. Procédé de fabrication d'un marquage routier (2) selon la revendication 10, dans lequel ledit rouleau presseur est un rouleau en silicone.

12. Procédé de fabrication d'un marquage routier (2) selon l'une quelconque des revendications précédentes, dans lequel ladite chaleur est fournie auxdites pièces de marquage routier (10) au moyen d'un rayonnement infrarouge.

13. Procédé de fabrication d'un marquage routier (2) selon l'une quelconque des revendications précédentes, dans lequel ledit procédé comprend en outre l'étape d'utilisation de moyens de refroidissement (12) pour refroidir ledit marquage routier (2) après l'étape de forçage desdites pièces de marquage routier (10) et du treillis (1) les uns contre les autres.

14. Procédé de fabrication d'un marquage routier (2) selon la revendication 12, dans lequel ladite étape de refroidissement dudit marquage routier (2) comprend le placement dudit marquage routier (2) sur une plaque froide (12).

15. Procédé de fabrication d'un marquage routier (2) selon l'une quelconque des revendications précédentes, dans lequel au moins une partie dudit treillis (1) est intégrée entre 0,05 mm et 5 mm, de préférence 0,1 mm et 3 mm et le plus préférablement entre 0, 15 mm et 1 mm dans ladite pièce de marquage routier (10).
